# EUROPEAN PATENT SPECIFICATION

(11) **EP 2 102 113 B1**
(45) Date of publication and mention of the grant of the patent: **07.01.2015**
(21) Application number: 07862166.1
(22) Date of filing: 21.11.2007
(51) Int. Cl.: C02F 1/42, C02F 1/00, C02F 101/12, C02F 101/36, C02F 103/06

(54) **SYSTEM AND METHOD FOR TREATING GROUNDWATER**
SYSTEM UND VERFAHREN ZUR BEHANDLUNG VON GRUNDWASSER
SYSTÈME ET PROCÉDÉ POUR LE TRAITEMENT DES NAPPES PHRÉATIQUES

(30) Priority: 22.11.2006 US 866900 P
(43) Date of publication of application: 23.09.2009
(73) Proprietor: Evoqua Water Technologies LLC, Alpharetta, GA 30022 (US)
(72) Inventor: BACHMAN, Gregory, Loves Park, IL 61111 (US); PESCHMAN, Timothy J., Maple Grove, MN 55369 (US); KELLOGG, Douglas C., Rockford, IL 61103 (US); OGLE, Jeffrey J., Rockford, IL 61114 (US)
(74) Representative: Crosby, Wendy Agnes
(86) International application number: PCT/US2007/024293
(87) International publication number: WO 2008/066748

(56) References cited:
- WO-A1-01/41927
- WO-A1-99/11350
- WO-A1-2006/022863
- US-A- 3 882 153
- US-A1- 2002 036 174
- US-A1- 2005 103 622
- US-A1- 2005 161 404
- US-A1- 2006 175 261
- US-B2- 6 881 348
- Cheryl A. Moody ET AL: "Occurrence and persistence of perfluorooctanesulfonate and other perfluorinated surfactants in groundwater at a fire-training area at Wurtsmith Air Force Base, Michigan, USA", J. Environ. Monit., 10 March 2003 (2003-03-10), pages 341-345, XP55002321, DOI: 10.1039/b212497 [retrieved on 2011-07-08]
- TANIYASU ET AL: "Analysis of fluorotelomer alcohols, fluorotelomer acids, and short- and long-chain perfluorinated acids in water and biota", JOURNAL OF CHROMATOGRAPHY, ELSEVIER SCIENCE PUBLISHERS B.V, NL, vol. 1093, no. 1-2, 4 November 2005 (2005-11-04), pages 89-97, XP005118416, ISSN: 0021-9673, DOI: 10.1016/J.CHROMA.2005.07.053
- Fardin Oliaei ET AL: "INVESTIGATION OF PERFLUOROCHEMICAL (PFC) CONTAMINATION IN MINNESOTA PHASE ONE", Report to Senate Environment Committee, 1 February 2006 (2006-02-01), XP055055674, Retrieved from the Internet: URL:http://www.nikwax.com/cmsdata/Download s/pr/7-investigation_PFC_minnesota.pdf [retrieved on 2013-03-07]

## Description

### BACKGROUND OF INVENTION

### 1. Field of Invention

The disclosed invention relates to methods and systems of treating water, and in particular to the removal of fluorinated hydrocarbons from groundwater.

### 2. Discussion of Related Art

Methods and systems of treating water using granular activated carbon have been disclosed. For example, Cannon et al., in U.S. Patent No. 7,157,006, discloses a method for perchlorate removal from groundwater.

The use of activated carbon has also been recommended in a report to the environmental committee of the senate of the United States of America ("Investigation of Perfluorochemical (PFC) Contamination in Minnesota - Phase One, Fardin Oliaei et al., Report to Senate Environment Committee, February 2006).

### SUMMARY OF INVENTION

The claims hereinafter relate to systems and methods of treating water, and in particular groundwater. Claim 1 relates to a method for groundwater remediation, and claim 12 relates to a system for groundwater remediation. Features of embodiments are to be found in the dependent claims.

An embodiment of a system for treating water may comprise a source of groundwater containing at least one fluorinated hydrocarbon species at a concentration of less than about 250 parts per billion, an ion exchange bed in fluid communication with the source of groundwater comprising ion exchange media having functional moieties on a hydrophobic polymer matrix, and an outlet in fluid communication with a at least one of a source of potable water, a source of water for household use, and a source of water for industrial use.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing.

In the drawings:
FIG. 1 is a flowchart of a method according to one aspect of the invention; and
FIG. 2 is schematic drawing illustrating a processor or control system upon which one or more embodiments may be practiced.

### DETAILED DESCRIPTION

Perfluorooctanoic acid (PFOA) and perfluorooctane sulfonate (PFOS) are contaminants that may be found in sources of groundwater. These compounds are suspected to adversely affect human health when ingested. Lab animal studies have found that high levels of PFOA can have adverse developmental impacts, may be toxic to the liver, and could be associated with an increased risk of certain types of cancer.

PFOA is a fluoropolymer processing aid having the general structure F(CF₂)₇CO₂H. PFOA has many uses due to its chemical stability, surface tension lowering abilities, and its ability to create stable foams. PFOA and various derivatives are used in fluoropolymer manufacture, fluoropolymer dispersions manufacture, in metal plating, in various cleaning and coating formulations, and in fire-fighting foam formulations. PFOA is also present as an impurity in PFOS based products such as certain fabric protectors, stain repellents, impregnation agents for textiles, paper, and leather, and general use cleaning products.

The United States Environmental Protection Agency (EPA) performed a preliminary risk assessment in 2003 and found that PFOA is pervasive and also resists degradation for a significant period in both the environment and in the human body. The half-life of PFOA in the human body is approximately 3.8 years. PFOA may leach into groundwater from landfills where PFOA or PFOS containing waste is deposited or from effluent from fluoropolymer production facilities. PFOA may enter human blood by ingestion of contaminated water of by ingestion of food products such as microwave popcorn which are packaged in grease resistant packages containing fluorotelemer compounds which may form PFOA when ingested.

The EPA and state agencies have established maximum recommended concentration levels for PFOA and PFOS in drinking water. For example, the maximum acceptable levels of PFOA and PFOS established by the Minnesota Department of Health in March 2007 are 0.5 parts per billion and 0.3 parts per billion, respectively.

Another groundwater contaminant of interest is perchlorate, and in particular, the perchlorate ion (ClO₄⁻). Perchlorate is also a regulated drinking water contaminant in many jurisdictions. For example, the maximum allowable contamination level (MCL) of perchlorate in good drinking water is six micrograms per liter in one state.

One or more of the embodiments are directed to methods and systems for groundwater remediation that removes or at least partially reduces the concentration of at least one undesirable species, or derivatives, complexes, or salts thereof. Groundwater remediation is contemplated as including the removal or at least the reduction of a concentration of one or more impurities or undesirable species from groundwater. In some aspects and embodiments, methods of groundwater remediation may include steps sufficient to reduce the concentration of one or more impurities or undesirable species to below predefined desired levels. These predefined desired levels may in some cases be defined by regulations. In some aspects and embodiments, methods of groundwater remediation may include steps sufficient to reduce the concentration of one or more impurities or undesirable species to levels low enough so that treated water may be safely consumed as drinking water by human beings. As used herein, the terms "groundwater" and "water" are used interchangeably. However, these terms are not meant to encompass process by-product streams or effluent from manufacturing plants such as fluoropolymer production facilities.

The invention includes providing a source of groundwater. The groundwater includes at least two undesirable species. The undesirable species may be regulated species. At least one undesirable species is a fluorinated species or a complex, adjunct, derivative, or salt a fluorinated hydrocarbon species, present at a concentration of less than 250 parts per billion. Some embodiments of methods may include providing a source of groundwater including a fluorinated hydrocarbon species at a concentration of less than 25 parts per billion. Further embodiments may include providing a source of groundwater including a fluorinated hydrocarbon species at a concentration of less than one part per billion. Examples of undesirable fluorinated hydrocarbon species may include any one or both of perfluorooctanoic acid and perfluorooctane sulfate. According to the invention, the source of groundwater includes one or more perchlorate species. The perchlorate species is present in the groundwater at a concentration of six micrograms per liter or greater.

Groundwater may be provided from any of a number of sources; nonlimiting examples include subterranean aquifers, springs, seeps, streams, rivers, and wells.

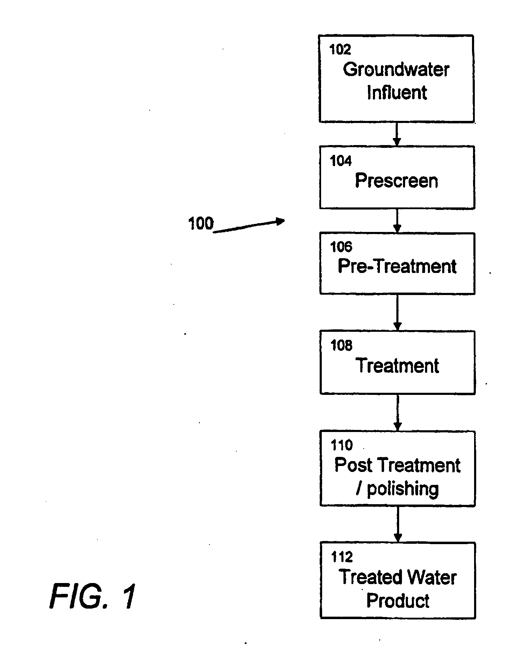

As illustrated in FIG. 1, a method 100 according to one or more embodiments may include stages or steps of providing a source of groundwater influent 102, pre-screening incoming groundwater 104, pre-treating the groundwater 106, treating the groundwater 108, post-treating the treated water 110, and providing treated water 112. FIG. 1 is representative of some aspects and embodiments of the invention; further aspects and embodiments may include steps performed in different orders or additional or fewer steps than those illustrated.

The disclosure also contemplates embodiments of systems that may perform any one or more of the steps illustrated in FIG 1. Such systems may have one or more groundwater supply sub-systems, one or more pre-screening sub-systems, one or more pre-treatment sub-systems, one or more treatment sub-systems, one or more post- treatment sub-systems, and one or more treated water delivery sub-systems. Some embodiments may include additional sub-systems and further embodiments may not include all of these sub-systems.

Pre-screening 104 may be performed utilizing one or more unit operations that remove large contaminants that may damage or reduce the effectiveness of downstream unit operations. Pre-screening may involve separation of particles or contaminants from groundwater based on differences of physical or chemical properties such as size, density, chemical reactivity, or charge. Pre-screening according to one or more embodiments may include passing incoming groundwater to be treated through at least one screen or filter with openings or pore sizes small enough to remove particles such as dirt or pebbles from the incoming water. Pre-screening may include other methods for removing contaminant particles from the incoming groundwater such as by centrifugal separation, gravitational separation, passage of the groundwater through porous filtration membranes, and similar techniques in accordance with the present invention.

Pre-treatment 106 may be performed utilizing one or more unit operations that prepare groundwater for further treatment by changing one or more characteristics of the groundwater such that further treatment operations may be performed more quickly or efficiently. Pre-treatment 106 may involve changing the state of one or more undesirable species to a state that can be better addressed or facilitates treatment by one or more downstream treatment processes. For example, the pH of the groundwater may be adjusted to render one or more undesirable species into an ionic form. In some embodiments, pre-treatment may involve steps for reducing the concentration of one or more species in order to facilitate reducing the concentration of one or more other species at later steps. In further embodiments, pre-treatment may involve reducing the concentration of at least one undesirable species from a higher level to a lower level that can be better addressed by downstream treatment steps. Pre-treatment according to one or more embodiments may include passing groundwater through reverse osmosis systems, pH adjustment systems, ion exchange systems, granular activated carbon or other carbon filtration systems, as well as other sub-systems that may facilitate various embodiments. Pre-treatment may also include passing incoming water through a system that removes biological or other impurities, such as, for example, ultraviolet treatment systems or thermal treatment systems. In some embodiments, the groundwater may be mixed or diluted with water from alternate sources, such as, for example, a source of potable water.

Treatment 108 is performed to adjust the composition of the groundwater. Treatment 108 includes steps to reduce the concentration of at least two undesirable species to a desired level. Treatment 108 is performed utilizing one or more unit operations that remove, degrade, decompose, or trap two or more undesirable species in groundwater to be treated onto a form of ion exchange media to reduce the concentration of at least one undesirable species to a desired, acceptable, or target level. In some embodiments, this desired, acceptable, or target level may be 100 parts per trillion or less. In one or more embodiments, a target level may be less than ten parts per trillion for one or more fluorinated hydrocarbon species. In one or more further embodiments, a target level may be less than one part per trillion for one or more fluorinated hydrocarbon species. In one or more embodiments, a target level may be less than six parts per billion for one or more undesirable species such as, for example, one or more perchlorate species.

Ion exchange treatment according to the invention includes contacting groundwater to be treated with ion exchange media that may reversibly or irreversibly trap or capture one or more undesirable species. The ion exchange media may include one or more pendant functional groups that may bind the one or more undesirable species that may be present in the water to be treated. The ion exchange media may have a hydrophobic backbone. This backbone may be a hydrophobic polymeric matrix. The ion exchange media may promote transport of one or more target species. The ion exchange media may include a combination of features including, for example, pore size, backbone material, and functional groups that facilitate the kinetics of removing or reducing the concentration of the one or more species from the groundwater to be treated. The ion exchange media may be arranged such as to provide a high flow of groundwater to be treated through the system. The ion exchange media may include media in bead, membrane, or powder forms. The ion exchange media is in the form of a resin.

One or more embodiments may include providing a representation of a concentration of at least one fluorinated hydrocarbon species in water at a location downstream of treating stage 108. The species may have been present in groundwater provided to the treatment system, or may have been added to the water at some prior step. The representation of a concentration of one or more species may be provided by a sensor integral to the system, or by a measurement system or sensor external to the system. The representation may be based on a measured characteristic of at least one surrogate species for one or more target species. This surrogate species may include, for example, a sulfate species or a chloride species. One or more surrogate species for one or more target species may be selected such that a change in a concentration of the one or more surrogate species downstream of a treatment stage 108 may correspond to, or precede a change in concentration of the one or more target species at a similar location. The correlation need not be one to one. In one or more embodiments, an increase in the concentration of one or more surrogate species may correspond to, or precede an increase in the concentration of one or more target species in the treated water. In some embodiments, the one or more surrogate species may have similar absorption kinetics onto an ion exchange media in the treating stage 108 as one or more target species. In one or more embodiments, an observation of a breakthrough of one or more surrogate species though ion exchange media may correlate to a breakthrough of one or more target species.

One or more embodiments may include reading or performing some action in response to a representation of a concentration of at least one species in water at a location downstream of vessel of ion exchange media, at a location upstream of a vessel of ion exchange media, between vessels of ion exchange media, or any combination thereof. Some embodiments may also include reading or performing some action in response to a representation of a concentration of at least one species provided by sensors at various locations throughout the system or external to the system. In one or more embodiments the species may be a fluorinated hydrocarbon species, a perchlorate species, or both.

One or more embodiments may include a step for analysis of the concentration of one or more species in water at one or more locations throughout the system. Analysis may include, for example, mass spectrometry, liquid chromatography, or other analytical methods. This analysis may be performed by an analysis sub-system integral to the treatment system, or may be performed by an analysis system external to the treatment system, for example, in an analysis lab.

Some embodiments may include the utilization of one or more process control systems. Process control may be utilized to protect against the delivery of improperly or incompletely treated water from the treatment system. Process control may include monitoring one or more parameters at one or more locations throughout the system. Process control may include monitoring a concentration of one or more species in water at one or more locations throughout the system. Process control may include suspending operation of a treatment system if a measured concentration of a species is outside of a desired range. Process control may include suspending operation of a treatment system if a measured concentration of a species exhibits a change over time that is outside of a desired range. Process control may include performing adjustments to operating parameters of the treatment system, including, but not limited to, input flow rate, temperature, residence time of water in the system, flow path of water through the system, or other parameters that may facilitate removal of one or more contaminant species from water.

Ion exchange treatment according to the invention includes contacting groundwater to be treated with ion exchange media in a treatment system, wherein substantially all wetted components of the treatment system may be substantially free of fluorinated hydrocarbon-based materials. For example, the treatment system may include piping composed primarily of stainless steel or other material substantially free of fluorinated hydrocarbons. The treatment system may include fittings and gaskets composed of materials substantially free of fluorinated hydrocarbons. For example, natural rubber and silicone polymer may be utilized as the wetted components that do not create a likelihood of introducing a fluorinated species into the water.

According to some embodiments, treatment may include the utilization of a system with multiple vessels in parallel or in series. Some embodiments may include passing groundwater to be treated through one or more of the vessels in the system. In some embodiments, groundwater may be passed through vessels arranged in a lead-lag flow configuration. Some embodiments according to the invention may include passing groundwater through a system that may include one or more vessels which may comprise at least one of a fluidized bed, a packed bed, a continuous flow column, and a thin film reactor.

Ion exchange treatment according to one or more embodiments may include contacting groundwater to be treated with ion exchange media in one or more vessels in a system, wherein the one or more vessels may contain a strong base ion exchange media. In some embodiments, the ion exchange media may comprise components that facilitate treatment of one or more target species. For example, the media can comprise or be comprised of segments that have an affinity for one or more of the target species. In some cases that involve advantageous features of the invention, at least a portion of the media may have a hydrophobic polymeric matrix. The hydrophobic polymeric matrix may comprise at least one of styrene and divinyl benzene. Suitable ion exchange media may include ion exchange resins such as Evoqua brands A-674, A-244, A-284, A-464, A-714, and A-399 available from Evoqua Water Technologies LLC., US. In some embodiments, the ion exchange media may comprise one or more functional moieties selected from the group consisting of hydroxide, sulfate, and chloride forms of any of tri-ethyl amine, tri-propyl amine, and tri-butyl amine functional groups. The ion exchange media may include combinations of resins with different functional groups.

Methods for treatment of water according to one or more embodiments may include periodically replacing ion exchange media in one or more vessels in a treatment system. The media may be replaced in one or more vessels at a time. In some embodiments, ion exchange media may be replaced after a predefined number of hours of operation of a system. The predefined number of hours may be dependent upon a particular application and may be based on factors including, for example, the volume, type, and number of treatment vessels, the volume of ion exchange media in the system, the type of ion exchange media in the system, the concentration, number, type, and form of undesirable species present in water to be treated by the system, target concentration levels for one or more species in water exiting the treatment system, and flow rate of water through the system. In some embodiments the predefined number of hours may be calculated from parameters including a representation of a concentration of at least one species, a measured rate of change of a representation of a concentration of at least one species, a flow rate of water through one or more portions or the system, or any combination thereof. The species may be, for example, a fluorinated hydrocarbon species, a perchlorate species, or both. Thus, for example, the media can be replaced or replenished when the concentration of PFOA or PFOS, or an aggregate of both, is within a tolerance or a buffer level defined by or established under a government mandated or suggested value. The concentration of the species may be measured in water at a location upstream or downstream of stage 108.

In some embodiments, the ion exchange media may be replaced or replenished when a representation of a concentration of at least one species reaches a pre-defined level. This level may include a buffer above a level that may be defined by or established under a government mandated or suggested value. The amount of buffer that may be required may be dependent upon a particular application. Factors that may be considered in establishing an appropriate buffer may include, for example, the volume, type, and number of treatment vessels, the volume of ion exchange media in the system, the type of ion exchange media in the system, the concentration, number, type, and form of undesirable species present in water to be treated by the system, target concentration levels for one or more species in water exiting the treatment system, and flow rate of water through the system, residence time of water in the treatment system, and response time of the system to commands to shut down, to alter operating parameters, or to alter flow paths of water through the system. The selection of the buffer level that prompts action before the regulated or target level may be site specific. In some cases, the buffer level can be defined as being within about 5% of target level or a regulated level of at least one undesirable species. In still other cases, the buffer level provides an indication of at least one work day prior to reaching the target level.

In some embodiments, ion exchange media in one or more vessels may be replaced in response to a representation of a concentration of at least one species in water at a location downstream of ion exchange media, at a location upstream of ion exchange media, or both. The at least one species may be, for example, at least one fluorinated hydrocarbon species, at least one perchlorate species, or both. Replacement of ion exchange media in a treatment system is understood to encompass physically replacing media in one or more vessels, switching out one or more vessels containing ion exchange media from the system, diverting flow of water to be treated from one or more vessels to one or more other vessels, switching the order of vessels through which water may pass, regenerating ion exchange media in one or more vessels, or any combination of these.

Treatment of groundwater according to one or more embodiments may include operation at various conditions that can provide a desired performance. These conditions may provide for better selectivity of removal or reduction in concentration of one or more species from the water. The conditions may provide for enhanced kinetics of removal of one or more species from groundwater. For example, treatment may include operation at various pH levels, at various temperatures, or at various pressures. Treatment of groundwater according to one or more embodiments may include ion exchange treatment at room temperature, at raised or lowered temperatures, or any combination thereof. Treatment of groundwater according to one or more embodiments may further include ion exchange treatment at a neutral pH, at a raised or lowered pH, or any combination thereof. For example, in some embodiments, a target species in water to be treated whose concentration is desired to be decreased by the use of an ion exchange media may be capable of being rendered into a more ionic form by a change in pH, temperature, or both of the water to be treated. In some embodiments, rendering a target species into a more ionic form may facilitate the reaction kinetics of reducing the concentration of this target species by ion exchange media, thus rendering a treatment system which utilizes ion exchange media to reduce the concentration of this target species more efficient.

Post-treatment 110 may be performed using one or more unit processes that prepare treated groundwater for an output stage to a point of use. Post-treatment may involve putting treated water into a condition for delivery into an external water delivery system. Post-treatment may involve removing, neutralizing, or rendering inert any treatment enhancing agents that may have been added to the groundwater during treatment Post-treatment may involve removing by-products of the treatment process. Post-treatment according to one or more embodiments may include passing treated groundwater over a polishing bed comprising ion exchange media. Post- treatment according to one or more embodiments may include performing reverse osmosis treatment, adding desirable chemicals such as chloride or fluoride species, heat treating, irradiating the treated groundwater with ultraviolet light or other radiation, deionization, filtration with granular activated carbon or other carbon-based filtration systems, pH adjustment, any combination thereof, or any other methods of post-treatment as needed to meet the requirements of any system or point of use to which the treated groundwater may be delivered.

One or more embodiments may include methods for delivering treated groundwater. Delivery of treated water may include physical transport of the water away from the treatment system. Physical transport may be accomplished by means such as, for example, pumping through fixed pipes, or transport by truck. The treated groundwater may be transported to any of a number of locations or systems, including, for example, municipal or private water supplies or systems, drinking water supplies or systems, industrial water supplies or systems, aquifers, reservoirs, lakes, rivers, irrigation systems, combinations of these, or to any other water system.

Treatment of water according to one or more embodiments may include one or more operations to provide at least one desired characteristic in groundwater provided by the system. Treatment of groundwater according to one or more embodiments may include a step of reducing the concentration of at least one undesired species to within an acceptable or target level. The target level may be mandated or suggested by a regulatory agency. The at least one species may be at least one fluorinated hydrocarbon species. In some methods of treatment, the concentration of at least one fluorinated hydrocarbon species may be reduced to less than 100 parts per trillion. Some aspects and embodiments may comprise reducing the level of at least one fluorinated hydrocarbon species to less than about ten parts per trillion. Some aspects and embodiments may comprise reducing the level of at least one fluorinated hydrocarbon species to less than about one part per trillion or even reducing the concentration of at least one fluorinated species by at least two orders of magnitude, or even at least three orders of magnitude. The reduction in the concentration of the fluorinated hydrocarbon species may be accomplished by contacting the groundwater to be treated with ion exchange media. Further aspects and embodiments may comprise reducing the level of at least one perchlorate species to less than about six micrograms per liter. In some embodiments, removal of at least one perchlorate species may be accomplished by contacting the groundwater with ion exchange media.

One or more embodiments may include regenerating ion exchange media. Regeneration may involve removing one or more species that have become bound to or captured by the ion exchange media. The removal of one or more captured species that have become bound to the ion exchange media may be accomplished in some embodiments by substituting one or more captured species with one or more different species. The different species may be one or more species for which functional groups on the ion exchange media have a greater affinity for than they do for the one or more captured species. The one or more different species may be in the form of an acid, a base, or a salt Regeneration may be performed in multiple stages using multiple different species. The ion exchange media may in some aspects or embodiments be regenerated by backwashing. In some embodiments, one or more captured species may be recovered from the media. The one or more captured species that may be recovered may include one or more fluorinated hydrocarbons species, one or more perchlorate species, or both. Species recovered from the media may be separated and purified by precipitating the desired chemical species from a fluid used to backwash the media or by other techniques consistent with the invention.

In some embodiments, ion exchange media which has been used to reduce the concentration of one or more undesirable species from water may be disposed. The undesirable species may include one or more fluorinated hydrocarbon species, one or more perchlorate species, or both. A method of disposal according to some embodiments may be by incineration. Incineration may occur at at least a temperature that destroys the media and any trapped species. The incineration of the media may be performed at a temperature above approximately 1200 degrees Celsius. The media may be incinerated in combination with other combustible material or in an incinerator solely dedicated to that purpose. Incinerator systems may include, for example, plasma furnaces, rotary kiln incinerators, or air suspension burning devices. The media may be mixed with fuel or other combustible material in order to increase the efficiency of combustion.

Systems according to one or more embodiments may include one or more feedforward or feedback mechanisms that may adjust flow rates, temperatures, pH, or any combination of these in areas of the system in response to a representation of a concentration of at least one fluorinated hydrocarbon species, a representation of a concentration of at least one perchlorate species, a representation of a concentration of some other species, a measured flow rate, a measured temperature, a measured pH level, or any combination thereof. Methods of control may further include performing adjustments to operating parameters of a treatment system including, but not limited to, residence time of water in various stages of the system, flow rate or flow path of water through the system, the amount of treatment agents used in pre- treatment or post- treatment stages, or other parameters that may affect removal of contaminant species from water.

In accordance with other aspects, some embodiments can involve computer-readable media having computer-readable signals stored thereon that define instructions that as a result of being executed by at least one processor, instruct the at least one processor to perform a method of adjusting one or more operating parameters of the treatment system. The method executable by the at least one processor can comprise one or more acts of generating one or more drive signals based at least partially on a measured concentration of a species in water at one or more locations in the system, and transmitting the one or more drive signals to at least one control means for performing adjustments to one or more operating parameters of the treatment system.

In one or more embodiments relevant to one or more embodiments, the systems and techniques disclosed herein may utilize one or more systems that adjusts or regulates or at least facilitates adjusting or regulating at least one operating parameter, state, or condition of at least one unit operation or component of the system or one or more characteristics or physical properties of a process stream. To facilitate such adjustment and regulatory features, one or more embodiments may utilize controllers and indicative apparatus that provide a status, state, or condition of one or more components or processes. For example, at least one sensor maybe utilized to provide a representation of an intensive property or an extensive property of, for example, water from the source, water entering or leaving the pre-treatment stage, or water entering or leaving the post-treatment stage. Thus, in accordance with a particularly advantageous embodiment, the systems and techniques may involve one or more sensors or other indicative apparatus, such as composition analyzers, that provide, for example, a representation of a state, condition, characteristic, or quality of the water entering or leaving any of the unit operations or components of the system.

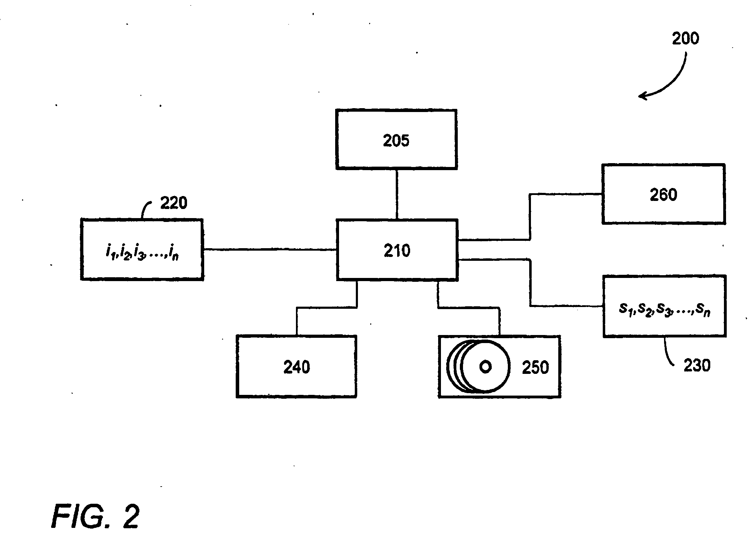

For example, the treatment system can comprise one or more control systems or controllers 200, as illustrated in FIG. 2. Control system 200 is typically connected to one or more sensors or input devices configured and disposed to provide an indication or representation of at least one property, characteristic, state or condition of at least one of a process stream, a component, or a sub-system of the treatment system. For example, control system 200 can be operatively coupled to receive input signals from any one or more of temperature and composition sensors located throughout the system. The input signals can be representative of any intensive property or any extensive property of water from the source or of treated water from any stage in the system. For example, one or more input signals from the source can provide an indication of the flow rate, the concentration of one or more species, the temperature, and/or the pressure to the control system 200. Input devices or sensors may likewise provide any one or more such representations of the at least partially treated water through the system.

Control system 200 can be configured to receive one or more input signals and generate one or more drive, output, and control signals to any one or more unit operations or sub-systems of the treatment system. Control system 200 can, for example, receive an indication of a flow rate, a concentration of at least one chemical species, or both, of water from a source. Control system 200 can then generate and transmit a drive signal to a means of adjusting the appropriate operating parameter or parameters of the system. The drive signal is typically based on the one or more input signals and a target or predetermined value or set-point. For example, if the input signal that provides representation of the concentration of at least one species of the inlet water from the source is above the target value or a range of acceptable values, i.e., a tolerance range, then the drive signal can be generated to appropriately adjust parameters of the pre-treatment stage or residence time or flow rate of water through the system. The particular target values are typically field-selected and may vary from installation to installation and be dependent on downstream, point of use requirements. This configuration inventively avoids providing water having undesirable characteristics by proactively addressing removal of contaminants and also avoids compensating for the system's residence or lag response time, which can be a result of water flowing through the system and/or the time required for analysis.

Control system 200 may also be configured in feedback arrangement and generate and transmit one or more control signals to any one or any combination of the various unit process stages or sub-systems of the treatment system. For example, the measured concentration of a species, or the temperature, or both, of the product water may be utilized to generate control signals to any of the pre-treatment, treatment, or post-treatment stages or sub-systems.

Control system 200 may further generate and transmit a control signal that energizes a pump or adjusts a flow rate of the at least partially treated water flowing therethrough. If the pump utilizes a variable frequency drive, the control signal can be generated to appropriately adjust the pump motor activity level to achieve a target flow rate value. Alternatively, an actuation signal may actuate a valve that regulates a rate of flow of the at least partially treated water from the pump.

Control system 200 may in some embodiments be configured to emit an alarm or provide an indication of the need for a change to some operating parameter, component, stage, or sub-system of the system or a need for some form of human intervention. This alarm or indication may be based upon one or more parameters measured by one or more sensors or input devices which may be located at various locations throughout the system. For example, the control system may provide an indication that ion exchange media in the system may be becoming less efficient in removing or reducing the concentration of one or more species from water in the system. This alarm or indication could be initiated by the control system in response to a signal from one or more sensors or analyzers which provide an indication of a concentration of at least one species in water at one or more locations in the system. The alarm or indication could be initiated when the concentration of the at least one species reaches a pre-set level, or in some embodiments, may be initiated when the indication of the concentration of the at least one species exhibits a change over time that meets or exceeds a certain change rate. In some embodiments the alarm or indication may be initiated under conditions that provide a buffer before a concentration of one or more regulated species reaches a mandated regulatory level. In response to this alarm or indication, the system may automatically perform, or may require human intervention to perform, replacement of ion exchange media in one or more vessels, switching out one or more vessels containing ion exchange media from the system, diverting flow of water to be treated from one or more vessels to one or more other vessels, switching the order of vessels through which water may pass, regenerating ion exchange media in one or more vessels, or any combination of these. In some embodiments the system may halt operation upon the occurrence of the alarm or indication and in some cases may not allow a user to resume operation until the alarm or indication is cleared.

Control system 200 may be implemented using one or more processors as schematically represented in FIG. 2. Control system 200 may be, for example, a general-purpose computer such as those based on an Intel PENTIUM(R)-type processor, a Motorola PowerPC(R) processor, a Sun UltraSPARC(R) processor, a Hewlett-Packard PA-RISC(R) processor, or any other type of processor or combinations thereof. Alternatively, the control system may include specially-programmed, special- purpose hardware, for example, an application-specific integrated circuit (ASIC) or controllers intended for analytical systems.

Control system 200 can include one or more processors 205 typically connected to one or more memory devices 250, which can comprise, for example, any one or more of a disk drive memory, a flash memory device, a RAM memory device, or other device for storing data. Memory device 250 is typically used for storing programs and data during operation of the treatment system and/or control system 200. For example, memory device 250 may be used for storing historical data relating to the parameters over a period of time, as well as operating data. Software, including programming code that implements embodiments of the invention, can be stored on a computer readable and/or writeable non-volatile recording medium, and then typically copied into memory device 250 wherein it can then be executed by processor 205. Such programming code may be written in any of a plurality of programming languages, for example, Java, Visual Basic, C, C#, or C++, Fortran, Pascal, Eiffel, Basic, COBAL, or any of a variety of combinations thereof.

Components of control system 200 may be coupled by an interconnection mechanism 210, which may include one or more busses, e.g., between components that are integrated within a same device, and/or a network, e.g., between components that reside on separate discrete devices. The interconnection mechanism typically enables communications, e.g., data, instructions, to be exchanged between components of the system.

Control system 200 can also include one or more input devices 220 receiving one or more input signals *i₁, i₂, i₃, ..., iₙ,* from, for example, a keyboard, mouse, trackball, microphone, touch screen, and one or more output devices 230, generating and transmitting, one or more output, drive or control signals, *s₁*, *s₂*, *s₃, ..., sₙ,* to for example, a printing device, display screen, or speaker. In addition, control system 200 may contain one or more interfaces 260 that can connect control system 200 to a communication network (not shown) in addition or as an alternative to the network that may be formed by one or more of the components of the system.

According to one or more embodiments, the one or more input devices 220 may include components, such as but not limited to, valves, pumps, and sensors that typically provide a measure, indication, or representation of one or more conditions, parameters, or characteristics of one or more components or process streams of the treatment system. Alternatively, the sensors, the metering valves and/or pumps, or all of these components may be connected to a communication network that is operatively coupled to control system 200. For example, sensors may be configured as input devices that are directly connected to control system 200, metering valves and/or pumps may be configured as output devices that are connected to control system 200, and any one or more of the above may be coupled to a computer system or an automated system, so as to communicate with control system 200 over a communication network. Such a configuration permits one sensor to be located at a significant distance from another sensor or allow any sensor to be located at a significant distance from any subsystem and/or the controller, while still providing data therebetween.

Control system 200 can comprise one or more storage media such as a computer-readable and/or writeable non-volatile recording medium in which signals can be stored that define a program or portions thereof to be executed by, for example, one or more processors 205. The one or more storage media may, for example, be or comprise a disk drive or flash memory. In typical operation, processor 205 can cause data, such as code that implements one or more embodiments of the invention, to be read from the one or more storage media into, for example, memory device 240 that allows for faster access to the information by the one or more processors than does the one or more media. Memory device 240 is typically a volatile, random access memory such as a dynamic random access memory (DRAM) or static memory (SRAM) or other suitable devices that facilitates information transfer to and from processor 205.

Although control system 200 is shown by way of example as one type of computer system upon which various embodiments may be practiced, it should be appreciated that the invention is not limited to being implemented in software, or on the computer system as exemplarily shown. Indeed, rather than implemented on, for example, a general purpose computer system, the control system, or components or subsystems thereof, may be implemented as a dedicated system or as a dedicated programmable logic controller (PLC) or in a distributed control system. Further, it should be appreciated that one or more features or embodiments may be implemented in software, hardware or firmware, or any combination thereof. For example, one or more segments of an algorithm executable by processor 205 can be performed in separate computers, each of which can be in communication through one or more networks.

Having thus described several aspects of at least one embodiment of this invention, it is to be appreciated various alterations, modifications, and improvements will readily occur to those skilled in the art. For example, the representation of a characteristic of the treated water may involve analytically determining a concentration of at least one target species at an off-site or off-line facility and providing the information thereof to the treatment system or an operator.

## Claims

1. A method for groundwater remediation comprising: providing groundwater containing at least one fluorinated hydrocarbon species at a concentration of less than 250 parts per billion, and containing at least one perchlorate species at a concentration of greater than six micrograms/liter; and contacting the groundwater to be treated with ion exchange media, providing a sensor disposed for providing a representation of a concentration of the at least one fluorinated hydrocarbon species in the treated groundwater at a location downstream of the ion exchange media, the ion exchange media having a hydrophobic polymeric matrix, wherein the ion exchange media is in the form of a resin and the hydrophobic polymeric matrix comprises at least one of styrene and di-vinyl benzene.

2. The method of claim 1, wherein the groundwater contains at least one fluorinated hydrocarbon species at a concentration of less than 25 parts per billion.

3. The method of claim 1, wherein the step of contacting the groundwater to be treated with ion exchange media comprises reducing the level of the at least one fluorinated hydrocarbon species to less than 100 parts per trillion, preferably to less than ten parts per trillion.

4. The method of claim 1, wherein the at least one fluorinated hydrocarbon species is at least one of PFOA and PFOS.

5. The method of claim 1, wherein the representation is based on a measured characteristic of at least one surrogate species for the at least one fluorinated hydrocarbon species.

6. The method of claim 1, further comprising contacting the groundwater to be treated with the ion exchange media in a vessel in a treatment system, wherein substantially all wetted components of the treatment system are substantially free of fluorinated hydrocarbon-based materials, regenerating the ion exchange media recovering fluorinated hydrocarbons from the media , and/or incinerating the ion exchange media.

7. The method of claim 1 wherein the groundwater is obtained from an aquifer.

8. The method of claim 5, wherein the ion exchange media is replaced in response to a representation of a concentration of the at least one fluorinated hydrocarbon species in water at a location downstream of the ion exchange media.

9. The method of claim 1, where the ion exchange media is replaced after a predefined number of hours of operation, preferably the predefined number of hours is calculated from a measured concentration of at least one fluorinated hydrocarbon species in water at a location upstream of the ion exchange media.

10. The method of claim 1 further comprising post-treating the groundwater, preferably the post treatment step comprises passing the water over a polishing bed of ion exchange resin.

11. The method of claim 1, further comprising providing treated groundwater to a source including at least one of a source of potable water, a source of water for household use, and a source of water for industrial use.

12. A system for groundwater remediation comprising: a vessel containing ion exchange media in fluid communication with the source of groundwater to be treated, the ion exchange media having a hydrophobic polymeric matrix; and a sensor disposed to provide a representation of a concentration of at least one fluorinated hydrocarbon species in water at a location downstream of the vessel, wherein the ion exchange media is in the form of a resin and the hydrophobic polymeric matrix comprises at least one of styrene and divinyl benzene.

13. The system of claim 12, wherein the vessel contains a strong base ion exchange media.

14. The system of claim 12, wherein the ion exchange media comprises functional moieties comprising of at least one of hydroxide, sulfate, and chloride forms of any of tri-ethyl amine, tri-propyl amine, and tri-butyl amine functional groups.

15. The system of claim 12, wherein the sensor provides the representation based on a measured characteristic of at least one surrogate species for the at least one fluorinated hydrocarbon species.

## Patentansprüche

1. Ein Verfahren zur Grundwassersanierung, beinhaltend: das Bereitstellen von Grundwasser, das mindestens eine fluorierte Kohlenwasserstoffspezies in einer Konzentration von weniger als 250 Teilen pro Milliarde enthält, und das mindestens eine Perchloratspezies in einer Konzentration von mehr als sechs Mikrogramm/Liter enthält; und das In-Kontakt-Bringen des zu behandelnden Grundwassers mit einem Ionenaustauschmedium, das Bereitstellen eines Sensors, der angeordnet ist, um eine Darstellung einer Konzentration der mindestens einen fluorierten Kohlenwasserstoffspezies in dem behandelten Grundwasser an einer Stelle stromabwärts des Ionenaustauschmediums bereitzustellen, wobei das Ionenaustauschmedium eine hydrophobe Polymermatrix aufweist, wobei das Ionenaustauschmedium in der Form eines Harzes vorliegt und die hydrophobe Polymermatrix mindestens eines von Styrol und Divinylbenzol beinhaltet.

2. Verfahren gemäß Anspruch 1, wobei das Grundwasser mindestens eine fluorierte Kohlenwasserstoffspezies in einer Konzentration von weniger als 25 Teilen pro Milliarde enthält.

3. Verfahren gemäß Anspruch 1, wobei der Schritt des In-Kontakt-Bringens des zu behandelnden Grundwassers mit einem Ionenaustauschmedium das Reduzieren des Niveaus der mindestens einen fluorierten Kohlenwasserstoffspezies auf weniger als 100 Teile pro Billion, bevorzugt auf weniger als zehn Teile pro Billion beinhaltet.

4. Verfahren gemäß Anspruch 1, wobei die mindestens eine fluorierte Kohlenwasserstoffspezies mindestens eines von PFOA und PFOS ist.

5. Verfahren gemäß Anspruch 1, wobei die Darstellung auf einer gemessenen Charakteristik von mindestens einer Ersatzspezies für die mindestens eine fluorierte Kohlenwasserstoffspezies beruht.

6. Verfahren gemäß Anspruch 1, ferner beinhaltend das In-Kontakt-Bringen des zu behandelnden Grundwassers mit dem Ionenaustauschmedium in einem Gefäß in einem Behandlungssystem, wobei im Wesentlichen alle benetzten Komponenten des Behandlungssystems im Wesentlichen frei von fluorierten kohlenwasserstoffbasierten Materialien sind, das Regenerieren des Ionenaustauschmediums, das die fluorierten Kohlenwasserstoffe aus dem Medium rückgewinnt, und/oder das Veraschen des Ionenaustauschmediums.

7. Verfahren gemäß Anspruch 1, wobei das Grundwasser aus einem Aquifer erhalten wird.

8. Verfahren gemäß Anspruch 5, wobei das Ionenaustauschmedium als Reaktion auf eine Darstellung einer Konzentration der mindestens einen fluorierten Kohlenwasserstoffspezies in Wasser an einer Stelle stromabwärts des Ionenaustauschmediums ersetzt wird.

9. Verfahren gemäß Anspruch 1, wobei das Ionenaustauschmedium nach einer vorher festgelegten Anzahl Betriebsstunden ersetzt wird, wobei die vorher festgelegte Anzahl Stunden bevorzugt aus einer gemessenen Konzentration von mindestens einer fluorierten Kohlenwasserstoffspezies in Wasser an einer Stelle stromaufwärts des Ionenaustauschmediums berechnet wird.

10. Verfahren gemäß Anspruch 1, ferner beinhaltend das Nachbehandeln des Grundwassers, wobei der Nachbehandlungsschritt bevorzugt das Führen des Wassers über ein Ionenaustauschharz-Polierbett beinhaltet.

11. Verfahren gemäß Anspruch 1, ferner beinhaltend das Bereitstellen von behandeltem Grundwasser gegenüber einer Quelle, einschließlich mindestens einer von einer Quelle für Trinkwasser, einer Quelle für Wasser für den Haushaltsgebrauch und einer Quelle für Wasser für den industriellen Gebrauch.

12. Ein System zur Grundwassersanierung, beinhaltend: ein Gefäß, enthaltend ein Ionenaustauschmedium in Fluidkommunikation mit der Quelle für zu behandelndem Grundwasser, wobei das Ionenaustauschmedium eine hydrophobe Polymermatrix aufweist; und einen Sensor, der angeordnet ist, um eine Darstellung einer Konzentration von mindestens einer fluorierten Kohlenwasserstoffspezies in Wasser an einer Stelle stromabwärts des Gefäßes bereitzustellen, wobei das Ionenaustauschmedium in der Form eines Harzes vorliegt und die hydrophobe Polymermatrix mindestens eines von Styrol und Divinylbenzol beinhaltet.

13. System gemäß Anspruch 12, wobei das Gefäß ein Ionenaustauschmedium mit starker Base enthält.

14. System gemäß Anspruch 12, wobei das Ionenaustauschmedium funktionelle Anteile beinhaltet, bestehend aus mindestens einer von Hydroxid-, Sulfat- und Chloridformen von einer beliebigen von einer triethylamin-, tripropylamin- und tributylaminfunktionellen Gruppe.

15. System gemäß Anspruch 12, wobei der Sensor die Darstellung auf der Basis einer gemessenen Charakteristik von mindestens einer Ersatzspezies für die mindestens eine fluorierte Kohlenwasserstoffspezies bereitstellt.

## Revendications

1. Une méthode destinée à la remédiation des eaux souterraines comprenant : le fait de fournir de l'eau souterraine contenant au moins une espèce d'hydrocarbure fluoré à une concentration inférieure à 250 parties par milliard, et contenant au moins une espèce de perchlorate à une concentration supérieure à six microgrammes/litre ; et le fait de mettre en contact l'eau souterraine devant être traitée avec un milieu échangeur d'ions, en fournissant un capteur disposé pour fournir une représentation d'une concentration de l'au moins une espèce d'hydrocarbure fluoré dans l'eau souterraine traitée à un emplacement en aval du milieu échangeur d'ions, le milieu échangeur d'ions ayant une matrice polymérique hydrophobe, dans laquelle le milieu échangeur d'ions se présente sous la forme d'une résine et la matrice polymérique hydrophobe comprend au moins soit du styrène, soit du divinyl-benzène.

2. La méthode de la revendication 1, dans laquelle l'eau souterraine contient au moins une espèce d'hydrocarbure fluoré à une concentration inférieure à 25 parties par milliard.

3. La méthode de la revendication 1, dans laquelle l'étape consistant à mettre en contact l'eau souterraine devant être traitée avec un milieu échangeur d'ions comprend le fait de réduire le niveau de l'au moins une espèce d'hydrocarbure fluoré à moins de 100 parties par billion, de préférence à moins de dix parties par billion.

4. La méthode de la revendication 1, dans laquelle l'au moins une espèce d'hydrocarbure fluoré est au moins soit du PFOA, soit du PFOS.

5. La méthode de la revendication 1, dans laquelle la représentation est basée sur une caractéristique mesurée d'au moins une espèce substitutive pour l'au moins une espèce d'hydrocarbure fluoré.

6. La méthode de la revendication 1, comprenant en sus le fait de mettre en contact l'eau souterraine devant être traitée avec le milieu échangeur d'ions dans une cuve d'un système de traitement, dans laquelle substantiellement tous les composants mouillés du système de traitement sont substantiellement exempts de substances à base d'hydrocarbure fluoré, de régénérer le milieu échangeur d'ions en récupérant des hydrocarbures fluorés du milieu, et/ou d'incinérer le milieu échangeur d'ions.

7. La méthode de la revendication 1 dans laquelle l'eau souterraine est obtenue d'un aquifère.

8. La méthode de la revendication 5, dans laquelle le milieu échangeur d'ions est remplacé en réponse à une représentation d'une concentration de l'au moins une espèce d'hydrocarbure fluoré dans l'eau à un emplacement en aval du milieu échangeur d'ions.

9. La méthode de la revendication 1, où le milieu échangeur d'ions est remplacé après un nombre d'heures de fonctionnement prédéfini, le nombre d'heures prédéfini étant de préférence calculé d'après une concentration mesurée d'au moins une espèce d'hydrocarbure fluoré dans l'eau à un emplacement en amont du milieu échangeur d'ions.

10. La méthode de la revendication 1 comprenant en sus le fait de post-traiter l'eau souterraine, l'étape de post-traitement comprenant de préférence le fait de faire passer l'eau par-dessus un lit polissant de résine échangeuse d'ions.

11. La méthode de la revendication 1, comprenant en sus le fait de fournir de l'eau souterraine traitée à une source incluant au moins soit une source d'eau potable, soit une source d'eau destinée à un usage ménager, soit une source d'eau destinée à un usage industriel.

12. Un système destiné à la remédiation des eaux souterraines comprenant : une cuve contenant un milieu échangeur d'ions en communication fluidique avec la source d'eau souterraine devant être traitée, le milieu échangeur d'ions ayant une matrice polymérique hydrophobe ; et un capteur disposé afin de fournir une représentation d'une concentration d'au moins une espèce d'hydrocarbure fluoré dans l'eau à un emplacement en aval de la cuve, dans lequel le milieu échangeur d'ions se présente sous la forme d'une résine et la matrice polymérique hydrophobe comprend au moins soit du styrène, soit du divinyl-benzène.

13. Le système de la revendication 12, dans lequel la cuve contient un milieu échangeur d'ions à base forte.

14. Le système de la revendication 12, dans lequel le milieu échangeur d'ions comprend des groupements fonctionnels composés d'au moins une forme parmi des formes hydroxyde, sulfate, et chlorure de n'importe lesquels des groupes fonctionnels tri-éthyl amine, tri-propyl amine, et tri-butyl amine.

15. Le système de la revendication 12, dans lequel le capteur fournit la représentation basée sur une caractéristique mesurée d'au moins une espèce substitutive pour l'au moins une espèce d'hydrocarbure fluoré.
